Europäisches Patentamt

**European Patent Office**

Office européen des brevets

(11) Publication number: **0 069 546**
**A2**

(12) **EUROPEAN PATENT APPLICATION**

(21) Application number: **82303463.2**

(22) Date of filing: **01.07.82**

(51) Int. Cl.³: **G 11 B 21/02**
**G 11 B 5/55**

(30) Priority: **02.07.81 US 280262**

(43) Date of publication of application:
**12.01.83 Bulletin 83/2**

(84) Designated Contracting States:
**DE FR GB IT**

(71) Applicant: **Irwin International, Inc.**
**2000 Green Road**
**Ann Arbor Michigan(US)**

(72) Inventor: **Velazquez, Juan F.**
**8520 Roundhill Court**
**Saline Michigan(US)**

(74) Representative: **Robinson, Anthony John**
**Metcalf et al,**
**Kilburn & Strode 30 John Street**
**London, WC1N 2DD(GB)**

(54) **Head arm and control system therefor.**

(57) A head arm (25) includes a pick-up head (18) at one end (22) and a pivot (24) for mounting the arm to a base (12) at a pivot position remote from the one end and spaced from an opposite end (28) with a drive (26) coupled to the arm in the area between the pivot and the opposite end for pivoting the arm to position the pick-up head with respect to a data disk (15). Preferably, the drive is a linear motor having a stator coil (70) embedded in the pick-up arm and field producing magnets (71, 73, 76, 78) mounted to the base. Preferably, also, there is a velocity pick-up coil (72) positioned to detect arm movement and provide, in connection with signals applied to the linear motor, synthesized linear velocity control signals employed for the controlling of the arm position. The arm preferably comprises upper (30) and lower (32) apertured members connected along their outer edges (31) by bridge members (35).

Fig. 2

# HEAD ARM AND CONTROL SYSTEM THEREFOR

The present invention relates to a computer disk drive system and particularly to a head arm and control system therefor and an arm construction therefor.

In floppy and hard disk drives of the type employed in computer systems, the head arm typically is driven by a pivot shaft through a microstepping motor for cueing the head to a desired data band and tracking the band. Such construction causes torsional and bending distortion of both the pivoted drive shaft and the head arm causing tracking errors and reducing the speed at which the pick-up head can shift from one data band to another.

According to one aspect of the present invention, a positioner apparatus for carrying a pick-up head and moving such head from one desired position to another comprises: an elongated arm with means at one end for supporting a pick-up head; a base for said arm; means for pivotally mounting said arm to said base at a pivot position remote from said one end and spaced from an opposite end; and means coupled to said arm in the area between said pivot position and said opposite end for acting upon said arm to pivot it about said pivot position. According to this aspect, the present invention thus overcomes the deficiencies of pivot driven head arms. Preferably, the pivoting means comprises a linear motor having a stator coil embedded in the pick-up arm and field producing magnets mounted to the base. In a preferred embodiment of the invention, the apparatus also includes a velocity pick-up coil positioned to detect arm movement and provide, in connection with signals applied to the linear motor, synthesized linear velocity control signals employed for the controlling of the arm position. Thus, according to a further aspect of the invention, a disk-type drive system has a pivoted head arm carrying a data read/write head thereon, and a control system for controlling the velocity of movement of the head arm comprising: a drive coil for receiving position control signals to move said head arm across a disk-type data medium; a velocity signal pick-up coil positioned to detect the head arm velocity and provide signals representative thereof; and circuit means coupled to said drive coil and to said velocity pick-up coil for summing signals therefrom and for applying the resultant signals to said drive coil, said circuit means including filter means to reduce noise interference.

According to a third aspect of the present invention, a pivot arm for use in holding a pick-up head employed for tracking information on a rotating disk comprises: first and second longitudinally extending members spaced from one another and integrally joined along a common edge, said members terminating at a first end adapted to receive a pick-up head, said members further including means remote from said first end for receiving a pivot shaft for the pivotal movement of said arm, and wherein said first and second members are mutually spaced and lie in planes located generally parallel to and on opposite sides of a disk medium so as to overlie said disk when the arm is pivoted toward the centre of the disk. This construction makes it possible to design the arm to provide mechanical resonant modes falling above a frequency band of the servo control system for the head arm resulting in an arm which is substantially free of resonant vibration and distortion and thereby extremely stable. The resultant arm construction permits mounting in virtually any position and provides very high speed movement and accurate tracking.

The invention may be carried into practice in various ways and one disk drive system embodying the invention will now be described by way of example with reference to the accompanying drawings, in which:

Figure 1 is a perspective view of a disk drive system incorporating the present invention;

Figure 2 is an enlarged fragmentary plan view of the structure shown in Figure 1;

Figure 3 is an enlarged fragmentary cross-sectional view taken along section lines III-III of Figure 2;

Figure 4 is an enlarged side elevational view of the head arm shown in Figure 2 taken in the direction of arrow IV in Figure 2;

Figure 5 is an enlarged fragmentary front end elevational view of the arm shown in Figure 2;

Figure 6 is an enlarged fragmentary cross-sectional view taken along section lines VI-VI of Figure 2;

Figure 7 is an enlarged fragmentary side elevational view of the arm taken in the direction of arrow VII in Figure 2;

Figure 8 is an enlarged cross-sectional view taken along section lines VIII-VIII of Figure 2;

Figure 9 is an enlarged cross-sectional view taken along section lines IX-IX of Figure 2;

Figure 10 is an enlarged cross-sectional view taken along section lines X-X of Figure 2;

Figure 11 is an electrical circuit diagram partly in block and schematic form of the control system employed in connection with the head arm;

Figure 12 is a frequency response waveform diagram;

Figure 13 is a frequency response waveform diagram; and

Figure 14 is an exploded view of an alternative embodiment of a portion of the structure shown in Figures 2 and 3.

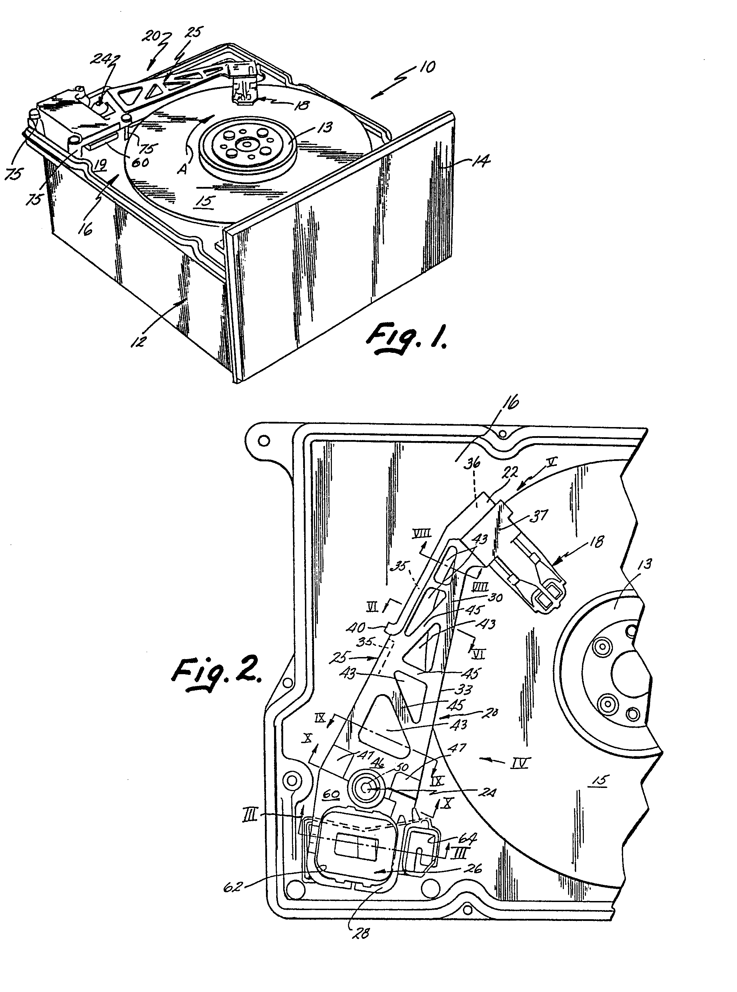

Referring initially to Figure 1 there is shown a disk drive 10 incorporating a head arm assembly 20. The disk drive includes a frame 12, front panel 14, and base plate 16 conventionally secured to the frame. A hub or platen 13 is rotatably mounted to base 16 and driven at very accurately controlled speed by a conventional drive system, as is well known. Hub 13 is designed to receive a 5 1/4 inch (133 mm) hard disk 15 capable of providing 612 data tracks having a storage capability on both sides of 10 megabytes. Thus, the drive 10 is dimensioned to correspond to that of conventional floppy disk drives and yet provide the storage capacity of significantly larger hard disk systems. Hub 13 rotates at a carefully controlled speed of 3600 rpm in a direction indicated by arrow A during the transfer of data to and from the disk by a conventional read/write head assembly 18 secured to a first end 22 of a head arm 25 as best seen in Figures 1 and 2.

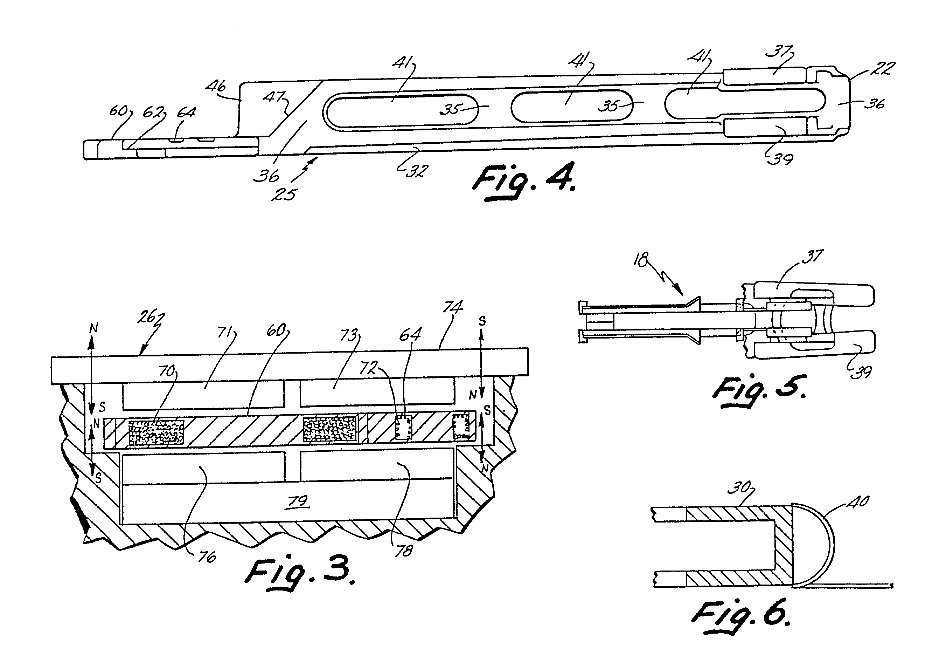

The head arm assembly 20 includes an elongated arm 25 having a pick-up head 18 mounted to the first end 22, a pivot mounting assembly 24 remote from the first end, and means 26 adjacent an opposite end 28 of arm 25 in the area between the pivot assembly and the opposite end 28 for driving the arm in a radially inward and outward direction above the magnetic disk 15 for reading and writing on data tracks contained thereon. Pick-up head 18 is removably mounted to the first end 22 of arm 25, while the positioning means 26 as described more fully hereinafter with reference to Figure 3 is partially embedded within the integral cast alloy arm 25.

As best seen in the plan view of Figure 2, arm 25 is tapered generally inwardly from end 28 toward first end 22. As seen in Figures 1, 2, 4, 7, 8 and 9 the arm comprises an upper member 30 and a lower member 32 spaced from the upper member to permit disk 15 to extend therebetween as seen in Figures 1 and 2. This permits arm 25 to be mounted relatively close to support base 16 adding to its stability. It is noted here that Figures 4, 7, 8 and 9 disclose only arm 25 with the pick-up head 18 and positioning means 26 removed for the sake of more clearly disclosing the arm structure itself. Members 30 and 32 are canted inwardly toward one another from the outer common edge 31 to the inner edge 33 thereof at an angle of approximately $3^{\circ}$. Members 30 and 32 are integrally joined at spaced locations along edge 31 by double concave sided partitioning walls or bridge members 35 (Figure 4) and end walls 36. The first end 22 of arm 25 defines a head receiving slot formed by outwardly extending lands 37 and 39 integrally formed on members 30 and 32 respectively and extending outwardly at an angle with respect to edge 31 of arm 25 to position the read/write head 18 for movement precisely transverse across disk 15 such that movement from an outer data track to an inner data track will follow the radius of the disk. The mounting of head 18 within the slot defined by configured lands 37 and 39 is substantially conventional and conductors from the pick-up head 18 extend along a lightweight harness 40 (Figures 2 and 6) toward the centre of arm 25 and thence downwardly through base 16 to the interconnecting circuitry.

As best seen in Figure 4, the generally vertically extending common edge 31 of integral arm 25 thereby includes generally oval shaped recesses 41 extending between the integral partitioning walls or bridges 35. The upper and lower members 30 and 32 similarly are relieved to include a plurality of facing triangular openings 43 along the length of arm 25 providing therebetween a truss-like support arm providing substantial rigidity to the arm and yet significantly reducing its weight. In the preferred embodiment the triangular sections include a pair of forward triangles having facing bases between which a transversely extending beam 45 is formed. A second pair of base facing triangles defines a second transversely extending beam section 45 about mid-way between first and second ends 22 and 28 respectively of the arm, while a final pair of triangles are triangular reliefs 43 having facing hypotenuses defining a diagonally extending beam 45. The relieved support members 30 and 32 thus define a latticework of beams extending across edges 31 and 32 of each member to provide a rigid, lightweight arm with mechanical resonance modes falling above the arm driving frequencies.

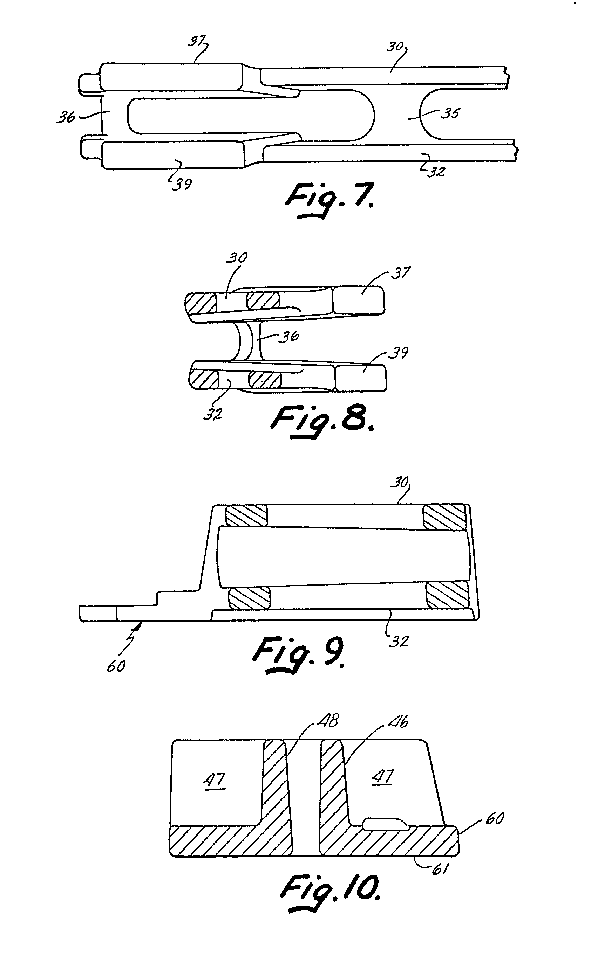

Integral with arm 25 there is provided a pivot shaft receiving boss 46 which, as best seen in Figure 10, includes a central downwardly extending aperture 48 for receiving a pivot shaft 50 (Figure 2) downwardly therethrough. Shaft 50 is secured within the tapered aperture 48 to prevent rotation between the shaft and arm 25 by, for example, force fitting the pivot shaft through aperture 48, by bonding or other conventional means. Boss 46 is integral with an extension plate 60 (Figure 4) which, in turn, integrally joins upper and lower members 30 and 32 as seen also in Figure 4. Spanning boss 46 are a pair of rearwardly downwardly inclined integral wall sections 47 (Figures 4 and 10) which integrally join members 30 and 32 with boss 46 and plate 60.

Positioned below the lower surface 61 (Figure 10) of the mounting boss 46 is a ferro-fluidic magnetic seal (not shown) which provides a fluid bearing surface for movement of arm 25 in spaced relationship to the upper surface of base 16. Pivot shaft 50 extends downwardly through base 16 to a pair of spaced bearings secured to the underside of base 16 to permit precise rotation of the pivot shaft 50 and arm 25 thereon with respect to base 16.

Plate 60 includes a pair of generally oval shaped recesses 62 and 64 as best seen in Figures 2, 3 and 4 for receiving therein a drive coil 70 and a velocity pick-up coil 72 respectively. Coils 70 and 72 as best seen in Figure 3 are positioned within recesses 62 and 64 and subsequently embedded therein by a suitable bonding or potting agent with coil 70 forming the rotor portion of a linear motor and coil 72 forming the armature of a generator. Plate 60 extends in vertically spaced relationship with respect to the upper surface 19 of base plate 16 as best seen in Figures 1 and 3 to position coils 70 and 72 between a pair of upper permanent magnets 71 and 73 secured to a keeper plate 74 secured, in turn, to base 16 by means of posts 75 (Figure 1) and suitable fastening screws, and lower aligned magnets 76 and 78 secured to base 16 by a spacer bar 79. The polarity of the bar magnets are as shown in Figure 3 to provide a direct magnetic field extending through the air gap and in perpendicular relationship to the direction of windings of coils 70 and 72 as best seen in Figure 3.

Drive coil 70 in the preferred embodiment comprises 200 turns of bifilar wound 34 AWG insulated copper wire wound in a generally oval configuration having a major dimension of 23.9 mm and a minor dimension of 19 mm. Velocity pick-up coil 72 comprises 350 turns of No. 40 AWG insulated copper wire wound in a generally oval shape having a major outside dimension of 15.2 mm and a minor outside dimension of 10 mm with a thickness of 1.4 mm. The thickness of drive coil 70 is approximately 5.1 mm. Each of the magnets 71, 73, 76 and 78 are permanent samarium cobalt magnets each having a strength of approximately $20 \times 10^6$ gauss. The air gaps between the magnets and coils are approximately 6.35 mm. Magnets 76 and 78 are trapezoidal in plan view and have a thickness of approximately 5.1 mm, end widths of approximately 10.2 and 12.7 mm, and a length of approximately 15.2 mm. Magnets 71 and 73 differ from 76 and 78 in their thickness of 2.55 mm instead of 5.1 mm. Thus, with the system described, a linear motor is positioned on a side of the arm of the pivot connection of the arm opposite the pick-up head to pivot the arm about shaft 50 to provide tracking of data tracks on disk 15.

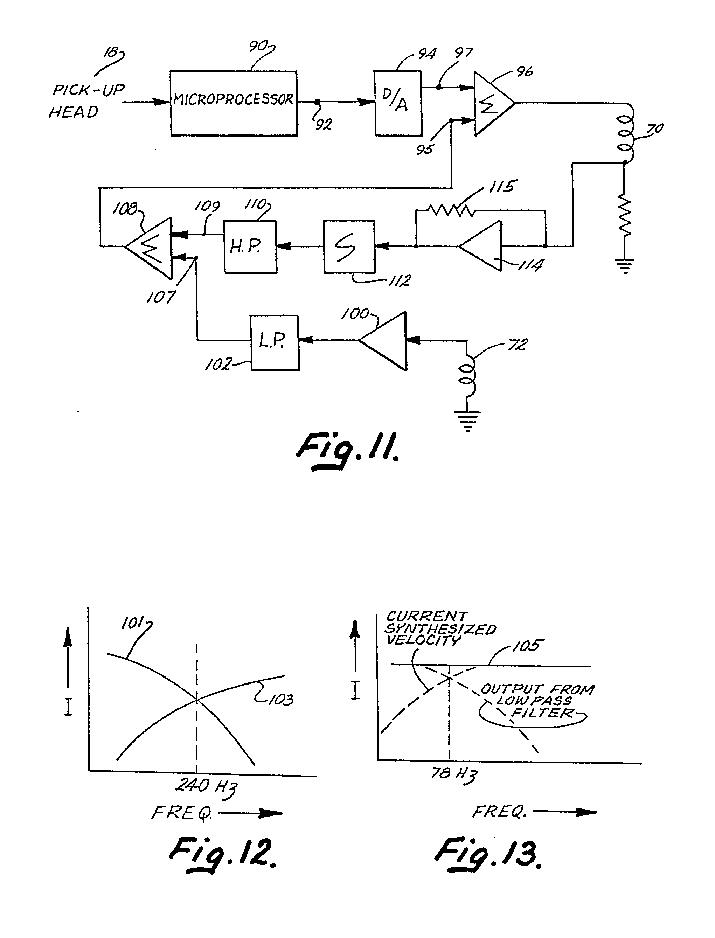

The signals applied to drive coil 70 are provided by a microprocessor 90 (Figure 11) which receives data location information from a keyboard, program, or other conventional source. The programming of the microprocessor, its input output circuits together with the position error information supplied at output terminal 92 are generally conventional and form no part of the present invention. The position control information at output terminal 92 is in the form of pulses applied to a digital to analog converter 94 providing an analog output signal having components within the frequency range of 0 to 1 kHz. These control signals are applied to an input terminal 97 of a summing amplifier 96 to drive coil 70 as shown schematically in Figure 11. The arm velocity is monitored by velocity coil 72 which, upon relative movement between the moving coil 72 and the magnetic field generated by magnets 73 and 78, generates an analog voltage applied through an amplifier 100 and subsequently to a 78 Hz (cross-over point) low pass filter 102. It is noted here that the actual movement of arm 25 generates velocity component signals detected by coil 72 with a frequency limit of approximately 240 Hz. In order to provide a linear feedback control, additional circuitry shown in Figure 11 is required.

Before describing the circuit of Figure 11 in detail however, reference is had to Figure 12 which shows the noise output of the velocity coil due to output current vs. output of velocity coil due to true arm motion. As can be appreciated, the velocity coil output 101 falls off markedly with frequency while the current induced noise 103 in the velocity coil 70 increases with frequency. The cross-over point for these curves is approximately 240 Hz and it is desired to provide a composite error control signal having linear characteristics as shown in Figure 13. The undesirable frequency vs. current characteristics shown in Figure 12 are due in part to the cross coupling of signals between coils 70 and 72 due to their proximity. In order to provide a linear synthesized error position control signal applied to an input terminal 95 of summing amplifier 96 having a characteristic as shown by waveform 105 of Figure 13, the circuit of Figure 11 is employed.

The low pass filter 102 provides an input signal to a first input terminal 107 of a summing amplifier 108. The low pass filter removes the current induced noise. A synthesized velocity information input signal at input terminal 109 from a high pass filter 110 having a cross-over point of 78 Hz, in turn, coupled to receive information from an integrator circuit 112 provides velocity information above 78 Hz. The input of integrator 112 is coupled to an amplifier 114, in turn, coupled to a current sensing resistor in series with coil 70 receiving acceleration representative signals therefrom. Amplifier 114 includes a scaling resistor 115 to adjust the gain thereof to provide the desired relative signal strengths at input terminals 107 and 109 to summing amplifier 108.  The resultant output signal 105 from amplifier 108 is shown in Figure 13 and provides a substantially flat response to provide accurate error velocity information to amplifier 96 in response to drive signals applied to input terminal 97.

The head arm structure and control system which have been described provide a head speed of approximately 40 milliseconds scanning 612 tracks contained on disk 15 as compared to prior art floppy disc drives which employ stepping motor pivot shaft drives requiring approximately 500 milliseconds to scan 200 tracks of information.

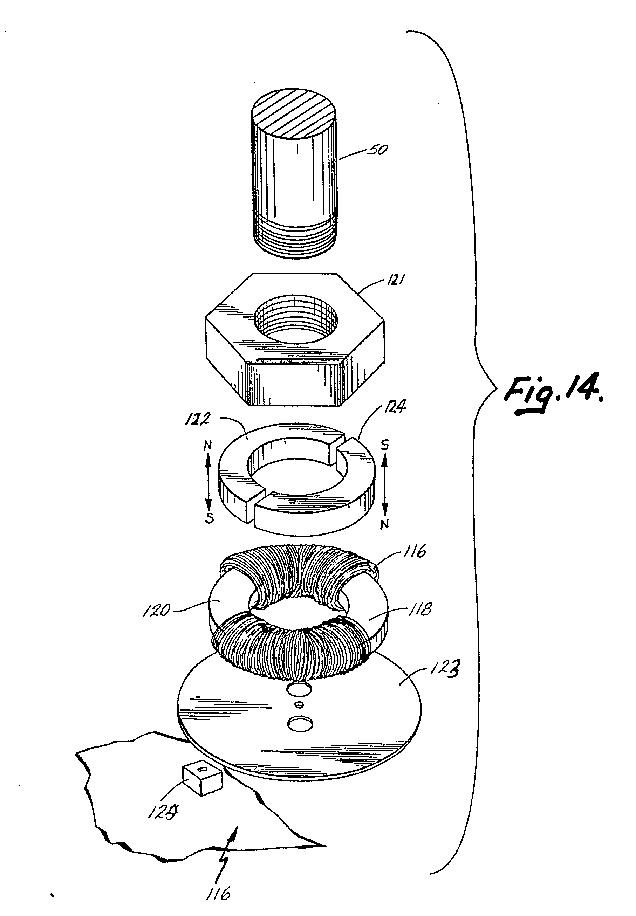

An alternative construction of the velocity coil portion of system shown in Figures 1 to 13 is shown in Figure 14 in which the coil is mounted remote from the drive coil.  Figure 14 shows an exploded view of the lower end of pivot shaft 50 which is rotatably mounted to base 16 and secured to arm 25 as previously described.  The end of pivot shaft 50 is threaded to receive a threaded nut 121 to which there is bonded a pair of semiannular magnets 122 and 124 each having a magnetic polarity as shown in Figure 14.  The magnets are made of sumarium cobalt ($SmCo_5$).  Positioned immediately adjacent magnets 122 and 124 are a pair of series coupled velocity pick-up coils 116 and 118 differentially wound around a toroid shaped core 120 made of a ferrite material having a relatively low

13. 0069546

permeability. (i.e. 60). The combined core 120 and coils 116 and 118 are positioned on a circuit board 123 which, in turn, is secured to base 16 by a suitable mounting bracket 129.

As can be seen, rotational movement of pivot shaft 50 by movement of arm 25 through drive cam means 26 induces current in coils 116 and 118 which are applied to the input terminal of amplifier 100. The utilization of velocity pick-up coils 116 and 118 as shown in Figure 14 raises the cross-over point of high and low pass filters 110 and 102 to about 300 Hz inasmuch as the mid-frequency intercoupling between drive coil 70 and the velocity coils 116 and 118 is virtually eliminated.

## CLAIMS

1. A positioner apparatus for carrying a pick-up head (18) and moving such head from one desired position to another, comprising: an elongated arm (25) with means at one end (22) for supporting a pick-up head (18); a base for said arm (12); means (24) for pivotally mounting said arm to said base at a pivot position remote from said one end and spaced from an opposite end (28); and means (26) coupled to said arm in the area between said pivot position and said opposite end for acting upon said arm to pivot it about said pivot position.

2. Apparatus as claimed in Claim 1 in which the means (26) for pivoting said arm comprises a linear motor having one of a stator (71, 73, 76, 78) or rotor (70) coupled to said base and the other of a stator or rotor coupled to said arm.

3. Apparatus as claimed in Claim 2 in which the rotor is a first coil (70) coupled to said arm.

4. Apparatus as claimed in Claim 3 which includes a second coil (72; 116, 118) for providing signals representative of movement of said arm.

5. Apparatus as claimed in Claim 4 in which the second coil (72) is positioned adjacent the first coil (70) and at least partially within the field produced by the magnet means.

6. Apparatus as claimed in Claim 4 or Claim 5 in which the means (24) for pivotally mounting said arm to said base includes a pivot shaft (50) and the second coil (116, 118) is fixedly positioned adjacent said pivot shaft, and which includes additional magnet means (122, 124) mounted to said pivot shaft to induce a current in said second coil upon movement of said arm.

7. Apparatus as claimed in any of Claims 2 to 6 in which the stator is permanent magnet means (71, 73, 76, 78) coupled to said base (12).

8. Apparatus as claimed in any of the preceding claims in which the arm (25) includes first (30) and second (32) spaced members integrally joined along an edge (31).

9. Apparatus as claimed in Claim 8 in which the first and second members are tapered along their length.

10. Apparatus as claimed in Claim 8 or Claim 9 in which the first and second members incline inwardly toward one another in a direction from said edge to an opposite edge (33).

11. Apparatus as claimed in Claim 8 or Claim 9 or Claim 10 in which the first and second members include a plurality of relief apertures (43) formed therethrough to define a latticework of support arms extending between opposite edges of said members.

12. Apparatus as claimed in any of Claims 8 to 11 in which the first and second members are joined at said edge by a plurality of spaced bridge members (35).

13. A pivot arm (25) for use in holding a pick-up head (18) employed for tracking information on a rotating disk (15), said arm comprising: first (30) and second (32) longitudinally extending members spaced from one another and integrally joined along a common edge (31), said members terminating at a first end (22) adapted to receive a pick-up head, said members further including means (48) remote from said first end for receiving a pivot shaft (50) for the pivotal movement of said arm, and wherein said first (30) and second (32) members are mutually spaced and lie in planes located generally parallel to and on opposite sides of a disk medium (15) so as to overlie said disk when the arm is pivoted toward the centre of the disk.

14. An arm as claimed in Claim 13 in which the first (30) and second (32) members are generally planar and include a plurality of apertures (43) formed therethrough to define a latticework of arms (45) extending from said common edge (31) to an opposite edge.

15. An arm as claimed in Claim 14 in which the apertures (43) are a plurality of pairs of longitudinally extending triangular shaped openings having facing spaced apart edges to define said latticework of arms.

16. An arm as claimed in Claim 13 or Claim 14 or Claim 15 in which the first (30) and second (32) members are joined along said common edge (31) by a plurality of spaced bridge members (35).

17. An arm as claimed in any of Claims 13 to 16 which includes an integral arm portion (60) extending outwardly from means (48) for receiving a pivot shaft and adapted to receive drive means (70) for pivoting said arm.

18. A disk-type drive system having a pivoted head arm (25) carrying a data read/write head (18) thereon, and a control system for controlling the velocity of movement of the head arm comprising: a drive coil (70) for receiving position control signals to move said head arm across a disk-type data medium (15); a velocity signal pick-up coil (72; 116, 118) positioned to detect the head arm velocity and provide signals representative thereof; and circuit means (Figure 11) coupled to said drive coil (70) and to said velocity pick-up coil (72) for summing signals therefrom and for applying the resultant signals to said drive coil, said circuit means including filter means (102, 110) to reduce noise interference.

19. A drive system as claimed in Claim 18 in which the filter means includes a low pass filter (102) coupled to said velocity pick-up (72) and a high pass filter (110) coupled to said drive coil (70).

20. A drive system as claimed in Claim 19 in which the high pass and said low pass filters have a common effective frequency of operation.

Fig. 1.

Fig. 2.

Fig. 4.

Fig. 5.

Fig. 3.

Fig. 6.

0069546

Fig. 7.

Fig. 8.

Fig. 9.

Fig. 10.

Fig.11.

Fig.12.

Fig.13.

Fig.14.